# EUROPEAN PATENT SPECIFICATION

(11) **EP 3 917 863 B1**
(45) Date of publication and mention of the grant of the patent: **04.09.2024**
(21) Application number: 20706584.8
(22) Date of filing: 28.01.2020
(51) Int. Cl.: B65G 47/28, B65G 47/31, B65G 47/32, B65G 47/86, B65G 47/90, B65G 43/08, B65G 43/10, B65G 15/14, B65G 15/22, B65G 17/12, B65G 17/46, B65G 54/02

(54) **HANDLING SYSTEM OF CONTAINERS EQUIPPED WITH A MOUTHPIECE AND A SYMMETRY PLANE PASSING THROUGH THE MOUTHPIECE AND RELATIVE HANDLING METHOD OF SAID CONTAINERS**
SYSTEM ZUM HANDHABEN VON BEHÄLTERN, DIE MIT EINER VERPACKUNG UND EINEM DURCHGEHENDEN SYMMETRIEPLAN FÜR DAS MUNDSTÜCK VERSEHEN SIND, UND VERFAHREN ZUM HANDHABEN DIESER BEHÄLTER
SYSTÈME DE MANUTENTION DE CONTENEURS ÉQUIPÉS D'UN EMBALLAGE ET AYANT UN EMBOUT PRÉSENTANT UN PLAN DE SYMÉTRIE TRAVERSANTE ET MÉTHODE DE MANUTENTION RELATIVE DESDITS CONTENEURS

(30) Priority: 29.01.2019 IT 201900001283
(43) Date of publication of application: 08.12.2021
(73) Proprietor: OCME S.r.l., 43122 Parma (PR) (IT)
(72) Inventor: MARTINI, Umberto, 43126 Parma (IT)
(74) Representative: Branca, Emanuela
(86) International application number: PCT/IB2020/050638
(87) International publication number: WO 2020/157641

(56) References cited:
- CN-A- 104 781 148
- ES-A1- 2 224 786
- FR-A1- 3 048 681
- US-A1- 2008 072 548
- US-B2- 9 580 254

## Description

The present invention relates to a handling system of containers equipped with a mouthpiece and a symmetry plane passing through the mouthpiece.

It also forms a method for handling these containers. The object of the present invention finds particular use in the industrial sector of automation in general and, in particular, it is dedicated to the handling of containers equipped with a mouthpiece and a symmetry plane passing through this mouthpiece between stations and/or linear and/or rotary feed devices provided in industrial machines, such as fillers, cappers, labellers and the like.

As is known, the handling of containers, even of different shapes that can have capacities up to a maximum of thirty litres, usually takes place at stations and/or linear and/or rotary feed devices of respective industrial machines by means of at least one feed conveyor on which these containers are arranged in single line and one against the other.

When the containers arrive at the destination station or device of the respective industrial machine, they are individually selected by it to be inserted into respective star wheels and/or advancement guides. The selected containers are then fed along the machine according to a predetermined path so that they are subjected to all the provided work phases, such as, for example, filling, capping, labelling or other, up to the last star wheel that transfers the relative containers to one or more outlet conveyors.

The traditional methods currently used to handle containers at the stations and/or linear or rotary devices of an industrial machine are generally of two types.

A first type of the traditional method provides that a path dedicated thereto is prepared for each different container sample. In particular, for each different container sample, at least one dedicated feeding auger having a sorting function, respective dedicated star wheels for the transfers between one carousel and the other of the respective machine and respective guides for containing the containers associated with the star wheels are provided.

Therefore, for each different type of container to be fed, it is necessary to build a set of dedicated components, called with the generic term "equipment", which must be assembled and disassembled when changing the size.

This involves several problems, such as:
- long machine downtimes to allow the operator on shift to replace the components in use with those relating to the new size to be loaded, which inevitably have a negative impact on the overall production times;
- need of having one or more sets of dedicated equipment for each type of size to be fed;
- having large-sized warehouse for the storage of all the equipment necessary for feeding all the sizes provided.

A second type of the traditional method provides that a path dedicated thereto is prepared for each different container sample. In particular, for each different type of container to be fed, a pattern, called "puck", being generally rectangular or oval in shape and of adequate height, which has a slot corresponding to the external profile of the container to be supported, is provided. The external dimensions of the pattern are always the same while the internal slot is partially counter-shaped to the container to be supported.

Each pattern occupied by the respective container is transferred to the station and/or device of the relative industrial machine by means of at least one feed conveyor. The patterns with the containers advance on the feed conveyor in a single line and one against the other.

Also in this case, at least one feed auger having a sorting function is provided at the inlet so as to properly feed the relative star wheels which are arranged between a carousel and the other one of the respective industrial machine.

According to the external shape of the patterns, all the components, called "equipment", designed to define the advancement path of the containers along the various processing stations of the relative industrial machine are prepared.

In particular, on the basis of the external shape of the patterns, the most appropriate conformation of the auger, of the star wheels and of the guides for containing the patterns on the star wheels is determined. All these components are fixed on the relevant industrial machine.

With respect to the first type of the traditional method, the second type has the advantage of not having to remove and replace the equipment fixed on the relative industrial machine when changing the size of the containers.

However, even in this case, the size change has some drawbacks, such as:
- long machine downtimes to allow the operator to replace all the patterns in use with the patterns designed to accommodate the new size of the containers to be fed, which inevitably have a negative impact on the overall production times;
- need of having one or more sets of dedicated patterns for each type of size to be fed;
- having large-sized warehouses for the storage of all the patterns necessary for feeding all the sizes provided;
- need to load and unload the containers on and from the patterns upstream and downstream the respective machine, which operation up to certain production velocities can only be performed manually or by means of special dedicated machinery with high costs and excessive dimensions.

In order to solve the drawbacks of the aforementioned known solutions, the Applicant has created a container feeding device which does not need either the above described equipment or the above described container housing patterns.

This container feeding device is described and illustrated in detail in the Italian patent application no. 102018000006863 of the same Applicant.

In particular, the container feeding device comprises a plurality of support bases for resting a respective container.

The support bases can be associated with suitable means of transport or conveyors in such a way as to advance along the predetermined path of the respective industrial machine through all the workstations provided.

Each support base includes a self-centering gripper clamping assembly that can be switched between a clamping position, in which it is closed on the container which remains locked on the respective support base, and a loading and unloading position, in which the gripper clamping assembly is open to allow the positioning of a new container to be fed or the disengagement of a container to be removed.

On each support base a reference point is defined and is intended for centering the mouthpiece of the relative container to be fed.

Each container is positioned on the respective support base with its own mouthpiece placed on its reference point.

In this way each container engages the relative support base in the same way in which the other containers engage the other respective support bases.

When the gripper clamping assembly of each support base is in the clamping position by closing the respective container, the support base and the corresponding container are integral so that they advance together along the predetermined path on the respective industrial machine.

While the support base always has the same pattern, the relative gripper clamping assembly adapts to the different sizes of the containers to be fed without requiring machine downtimes, dedicated sets of equipment or patterns and large warehouses for storing them.

Although the feeding device of the Applicant's containers is extremely innovative with respect to the solutions of the prior art allowing the resolution of evident problems found in them, the Applicant had the intuition of being able to further improve this device in relation to the positioning of the containers on the respective support bases.

In particular, the Applicant has realized that he can refine the positioning of the mouthpiece of each container with respect to the reference point identified on each support base and improve the handling of the containers to be fed in terms of synchronisation.

A further handling system of containers according to the preamble of independent claim 1 and a method for handling containers according to the preamble of independent claim 9 is shown in US 9 580 254 B2.

The object of the present invention is to propose a handling system of containers equipped with a mouthpiece and a symmetry plane passing through the mouthpiece as well as a method for handling these containers capable of achieving the intended objects by improving the prior art.

The aforementioned object and others, are substantially achieved by a handling system of containers equipped with a mouthpiece and a symmetry plane passing through the mouthpiece and a method for handling these containers, as described and claimed hereinafter.

Such description will be made herein below with reference to the accompanying drawings, provided for indicative only and therefore not limiting purpose, in which:
Figure 1 is a schematic perspective view of a handling system of containers equipped with a mouthpiece and a symmetry plane passing through the mouthpiece, in accordance with a first embodiment of the present invention;
Figure 2 is a schematic plan view of the handling system of Figure 1;
Figure 3 is a schematic perspective view of a handling system of containers equipped with a mouthpiece and a symmetry plane passing through the mouthpiece, in accordance with a second embodiment of the present invention;
Figure 4 is a schematic plan view of the handling system of Figure 3;
Figure 5 is a schematic perspective view of a handling system of containers equipped with a mouthpiece and a symmetry plane passing through the mouthpiece, in accordance with a third embodiment of the present invention;
Figure 6 is a schematic plan view of the handling system of Figure 5;
Figure 7 is a schematic perspective view of a handling system of containers equipped with a mouthpiece and a symmetry plane passing through the mouthpiece, in accordance with a fourth embodiment of the present invention;
Figure 8 is a schematic plan view of the handling system of Figure 7;
Figure 9 is a schematic elevation view of a support unit of a system transportation device of Figures 1 to 8;
Figure 10 is a schematic plan representation of the support unit of Figure 9;
Figure 11 is a further schematic elevation view of the support unit of Figures 9 and 10.

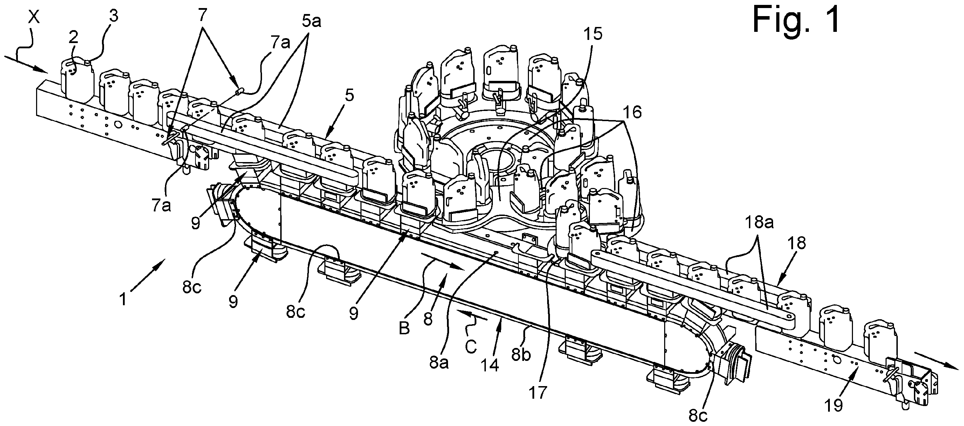

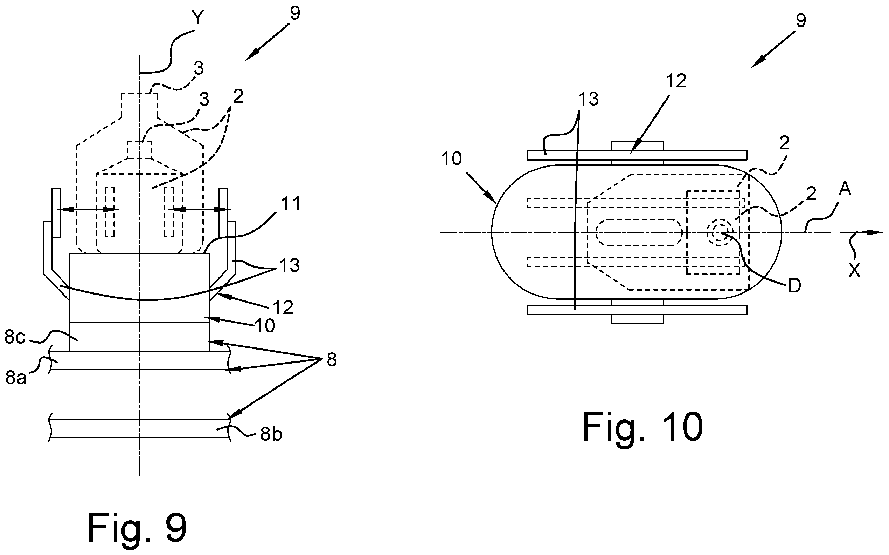

With reference to Figures 1 to 8, the number 1 indicates overall a handling system of containers 2 equipped with a mouthpiece 3 and a symmetry plane Y (figure 9) passing through the mouthpiece 3, in accordance with the present invention.

As can be seen in Figures 1 to 8, the handling system 1 comprises at least one feed conveyor 4 suitable for advancing a plurality of containers 2 along a main feeding direction X, generally in single line and in contact with each other or according to very close positions.

The feed conveyor 4 is advantageously provided at the outlet with at least one channelling device 5 at which the containers 2 are spaced from each other according to a predetermined rate.

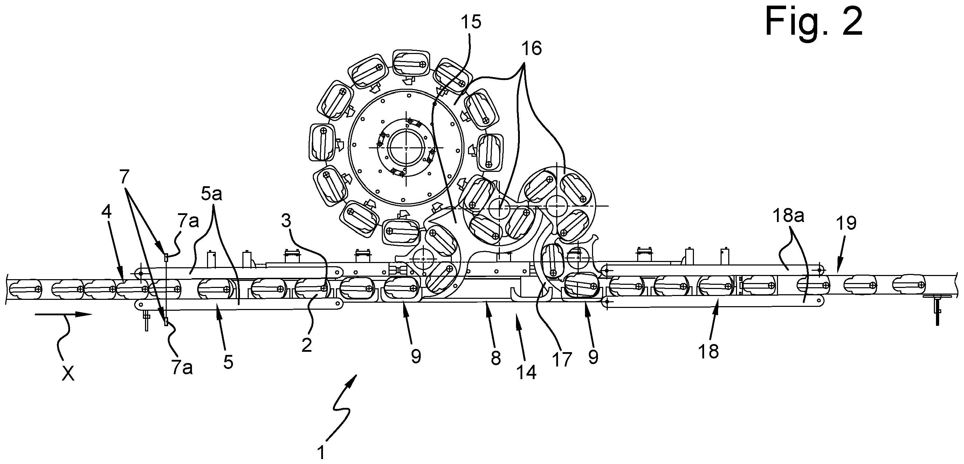

In accordance with the embodiment illustrated in figures 1 and 2, the channelling device 5 of the containers 2 is suitable for advancing the containers 2 along the main feeding direction X according to a predetermined and adjustable advancement velocity V1 which is higher than the advancement velocity V0 of the feed conveyor 4 whereby the containers 2 to be fed are spaced from each other at least during their passage from the feed conveyor 4 to the respective feed channelling device 5. Still with reference to Figures 1 and 2, the channelling device 5 comprises a pair of movable side belts 5a which drag and feed the containers 2 at the velocity V1. When the containers 2, which advance one against the other on the feed conveyor 4, arrive at the pair of belts 5a of the channelling device 5, are accelerated by the same so as to be separated from the other containers 2 according to a predetermined distance and consequently facilitate the subsequent synchronization operations of the devices and handling mechanisms arranged downstream the feed conveyor 4.

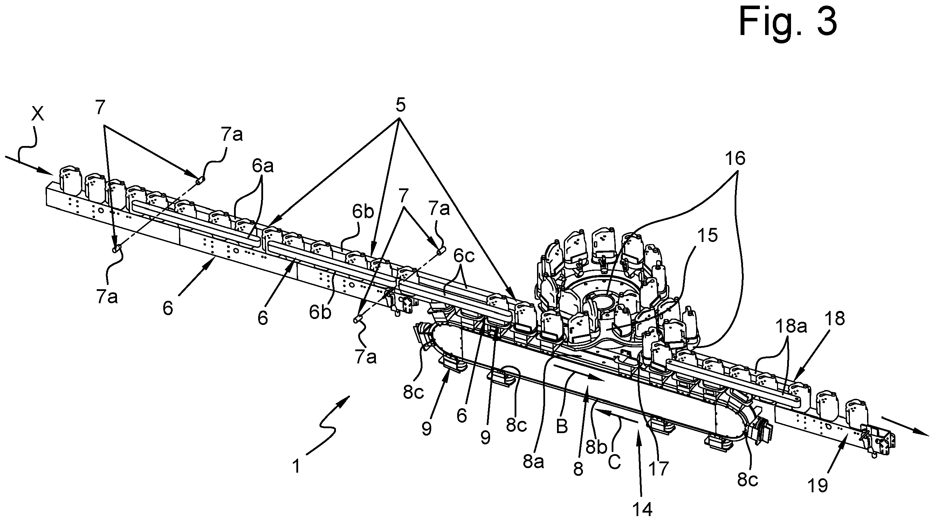

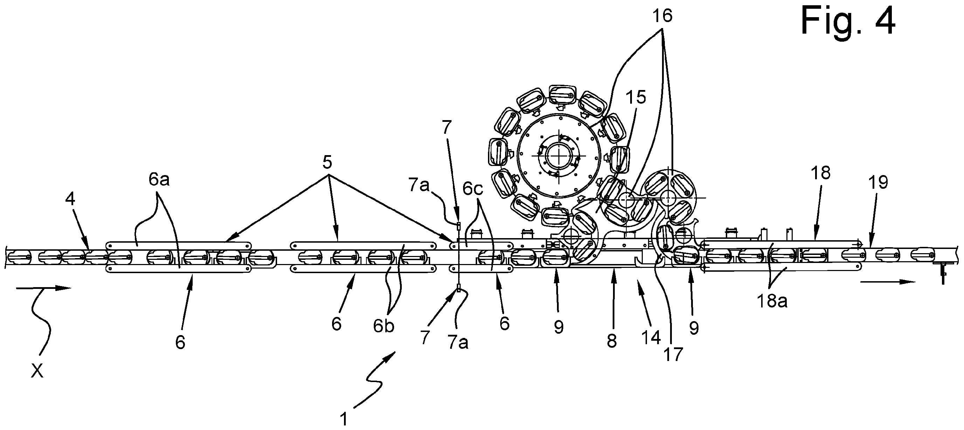

In accordance with the embodiment illustrated in Figures 3 and 4, the channelling device 5 of the containers 2 can comprise two or more advancement portions 6, preferably three, each one arranged to feed the containers 2 to be fed according to different advancement velocities V1, V2 and V3, higher than the advancement velocity V0 of the feed conveyor 4, whereby the feed containers 2 are progressively spaced from each other according to predetermined parameters in order to obtain an advancement rate suitable for subsequent synchronizations between the provided devices and handling mechanisms.

Also in this case, each advancement portion 6 of the channelling device 5 comprises at least a respective pair of movable side belts 6a, 6b, 6c which drag and feed the containers to be fed according to the velocities V1, V2 and V3 respectively where the velocity V2 is higher than the velocity V1 and lower than the velocity V3.

Advantageously, each pair of movable side belts 6a, 6b, 6c of the channelling device 5 can be controlled in such a way as to vary the respective advancement velocity V1, V2, V3 of the containers 2 in different sections of the main advancement direction X.

Preferably, the pair of movable side belts 6c of the channelling device 5 that is furthest from the feed conveyor 4 can be controlled to vary the velocity V3 and synchronize the advancement of the containers 2 with the devices and/or the handling mechanisms provided downstream the feed conveyor 4.

As can be seen in Figures 1 to 8, at least one position detector 7 of the containers 2 to be fed, preferably an optical sensor 7a or similar optical position detector, is advantageously associated with the feed conveyor 4 and, in particular, with the channelling device 5 of the latter, so as to provide a continuous indication of the position of each container 2 along the channelling device.

With reference to Figures 1 to 8, the handling system 1 further comprises at least one transportation device 8 for the containers 2 arriving from the channelling device 5 of the feed conveyor 4 operatively arranged downstream the latter.

As can be seen in Figures from 1 to 8, the transportation device 8 is provided with a plurality of feed elements 8c that can be, each one, coupled to a respective support unit 9, which is also part of the invention, which is suitable for the transport of a respective container 2 at least along a common portion of the main feeding direction X.

In detail, each support unit 9 comprises a respective support base 10, having a resting surface 11 for supporting the bottom of a container 2 which arrives from the feed conveyor 4 or from the channelling device 5 of the latter. Each support unit 9 can be coupled to a respective feed element 8c of the transportation device 8 by means of suitable intermediate coupling elements, being it able of being decoupled therefrom to follow a path different from the path of the respective feed element 8c.

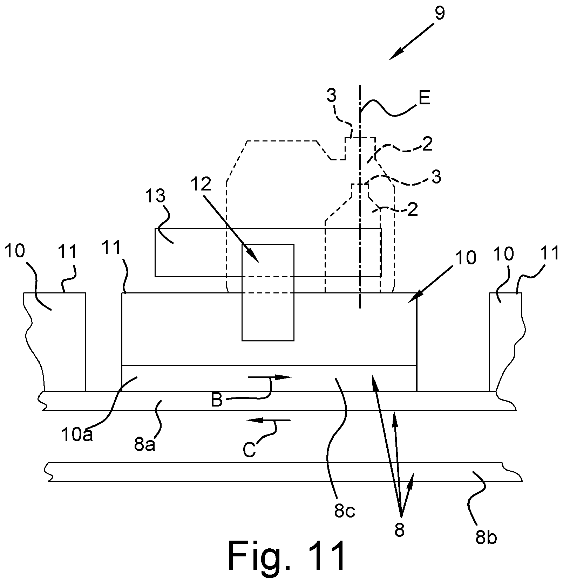

As can be seen in Figures 9 and 10, the support base 10 of each support unit 9 is symmetrical with respect to a symmetry plane which comprises a longitudinal axis A (figure 11), coinciding with the main advancement direction X.

Advantageously, each support unit 9 comprises a clamping assembly 12, preferably at least a gripper 13, of the self-centering container 2 with respect to the longitudinal axis A of the respective support base 10 and coinciding with the main advancement direction X, i.e. equipped of a symmetrical stroke with respect to the symmetry plane Y of the containers 2.

The clamping assembly 12 of each support portion 9 is switchable between a closed and clamping position of the container 2 and an open position which allows its loading and unloading.

Each support unit 9 further comprises an independent kinematic mechanism for actuating the respective clamping assembly 12, i.e. not powered by and not constrained to the transportation device 8.

The actuating kinematic mechanism of the clamping assembly 12 of each support unit 9 comprises at least one control element, preferably with cam, which, in predetermined fixed positions, controls the opening of the respective clamping assembly 12.

On the support base 10 of each support unit 9 and, in particular on the longitudinal axis A of the latter, a virtual reference point D is defined and identified.

The virtual reference point D is always at a fixed distance from the front end of the respective support base 10 and is intended for centering the mouthpiece 3 of the respective container 2 to be transported. In particular, the centering of each container 2 with respect to the support base 10 of the respective support unit 9, is made by aligning a reference axis E (figure 11) of the respective mouthpiece 3 with the virtual point D of the respective support base 10, under a condition in which the support unit 9 is coupled to a respective feed element 8c of the transportation device 8.

The virtual point D is fixed on the support base 10 and does not vary with the variation of the dimensions and/or shape of the container 2, thus allowing, without having to change the equipment in use, the repeatability of the operations that are carried out on the relative operating machine such as for example filling, capping and/or other similar operations.

Advantageously, the virtual point D is taken as a reference point for carrying out all the operations that the operating machine must carry out as it corresponds to the mouthpiece 3 of the respective container 2.

As can be seen in Figures 1, 3, 5 and 7, the transportation device 8 has a feed branch 8a and a return branch 8b. Along the feed branch 8a, each feed element 8c of the transportation device 8 provided with a respective support unit 9 advances in the same travel direction as the containers 2 following a first direction B substantially parallel to the main advancement direction X. Along the return branch 8b each feed element 8c of the transportation device 8 also provided with a respective support unit 9 advances in the opposite direction to the travel direction of the containers 2, following a second direction C substantially parallel to the first direction B.

In accordance with a variant embodiment of the present invention, each feed element 8c of the transportation device 8 with a respective support unit 9 is movable independently of each other along a closed path of the transportation device 8 itself, which has at least one section in common with the main feeding direction X of the feed conveyor 4.

Preferably, the closed path of each feed element 8c of the transportation device 8 with a respective support unit 9 has at least an advancement section of the containers 2 which extends at least in part along the channelling device 5 of the feed conveyor 4.

In accordance with a preferred aspect of the present invention, each feed element 8c of the transportation device 8 is independently controllable during the handling along the aforementioned closed path, both in the excursion and in handling velocity. In this way, it is possible to synchronize the handling of each feed element 8c with respect to a corresponding container 2 advancing along the channelling device 5 of the feed conveyor 4 in order to ensure the correct positioning of the respective mouthpiece 3 with respect to the virtual reference point D of the support base 10 of the support unit coupled to the feed element 8c.

Advantageously, the independent handling of each feed element 8c along the closed path of the transportation device 8 is ensured by the fact that each feed element 8c is provided with or is part of an independent, optionally autonomous driven device (not shown).

Preferably, each feed element 8c of the transportation device 8 is provided with or is part of a respective linear electric and/or magnetic motor which allows independent displacements along the closed path of the transportation device 8. In other words, each feed element 8c of the transportation device 8 is subjected to accelerations and/or decelerations which allow the support unit 9 coupled thereto to be placed in the ideal position to receive the container 2 advancing along the channelling device 5 of the feed conveyor 4 with the mouthpiece 3 aligned with the virtual reference point D of the respective support base 10.

More and more in detail, through each independently movable feed element 8c, each support unit 9 carried by the transportation device 8 can be controlled with respect to the other support units 9 so as to accompany and/or follow and/or wait for the respective container 2 that is advancing and to be transported.

In accordance with a further embodiment of the present invention, each feed element 8c of the transportation device 8 is fixed, according to a constant rate, preferably adjustable, to a dragging continuous element of the transportation device, optionally a chain or a conveyor belt or a belt. In this case, the handling of the feed elements 8c of the transportation device 8, each suitable for transporting a respective support unit 9, can be controlled by managing the advancement velocity of the dragging continuous element of the transportation device 8.

The dragging element of the transportation device 8 is made to advance at a constant velocity whereby each feed element 8c of the latter also advances according to a constant velocity along the respective closed loop path. The synchronization of the advancement of the containers 2 to be transported which are advancing along the channelling device 5 of the feed conveyor 4 and of the support units 9 carried by the feed elements 8c of the transportation device 8 is preferably managed by varying the velocity of the movable side belts 6a, 6b, 6c of the channelling device 5.

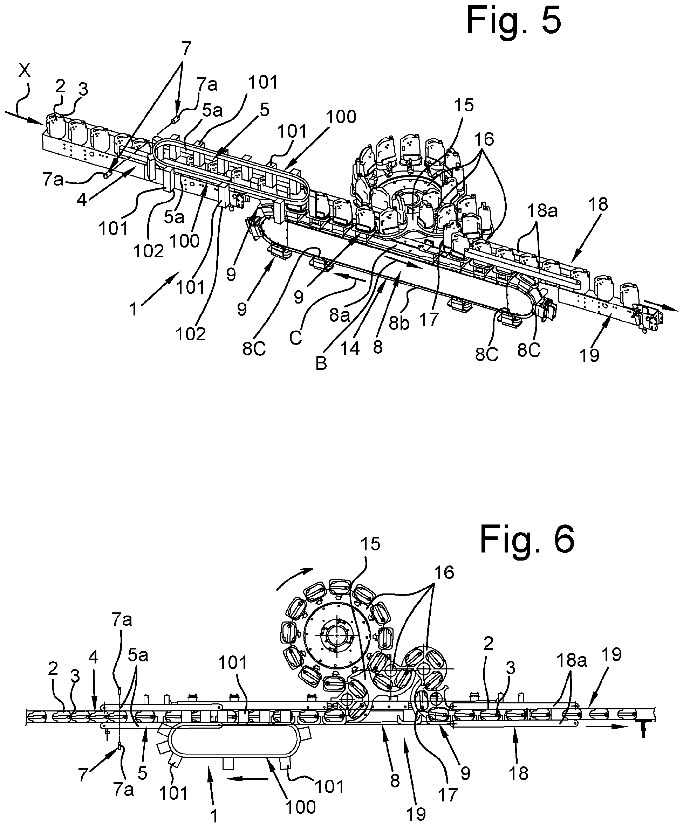

In accordance with the embodiment illustrated in Figures 5 and 6, the handling system 1 further comprises at least an auxiliary transportation device 100 operatively associable to the feed conveyor 4 or to the channelling device 5 thereof to assist the synchronization between the latter and the feed elements 8c of the transportation device 8 with the respective support units 9.

The auxiliary transportation device 100 is provided with a plurality of transfer units 101, preferably each one provided with a gripping portion 102 (Figure 5). The gripping portion 102 of each transfer unit 101 is capable, for example by means of corresponding grippers, of grasping the mouthpiece 3 of the container 2 to be transferred and bring it to the respective support unit 9.

As can be seen in Figures 5 and 6, the auxiliary transportation device 100 is suspended above the feed conveyor 4 and/or the channelling device 5 whereby the engagement of the containers 2 to be fed, by the transfer units 101, as well as the deposit of the same on the respective support units 9 carried by the respective feed elements 8c of the transportation device 8, are carried out from the top.

Advantageously, each transfer unit 101 is movable, preferably independently of each other, along at least a portion of the main feeding direction X.

Preferably, each transfer unit 101 is movable independently of the others according to the same principle applied to the independent handling of the feed elements 8c of the transportation device 8.

Each transfer unit 101 of the auxiliary transportation device 100 is also provided with or is part of a respective motor (electric and/or magnetic) which allows the independent handling thereof.

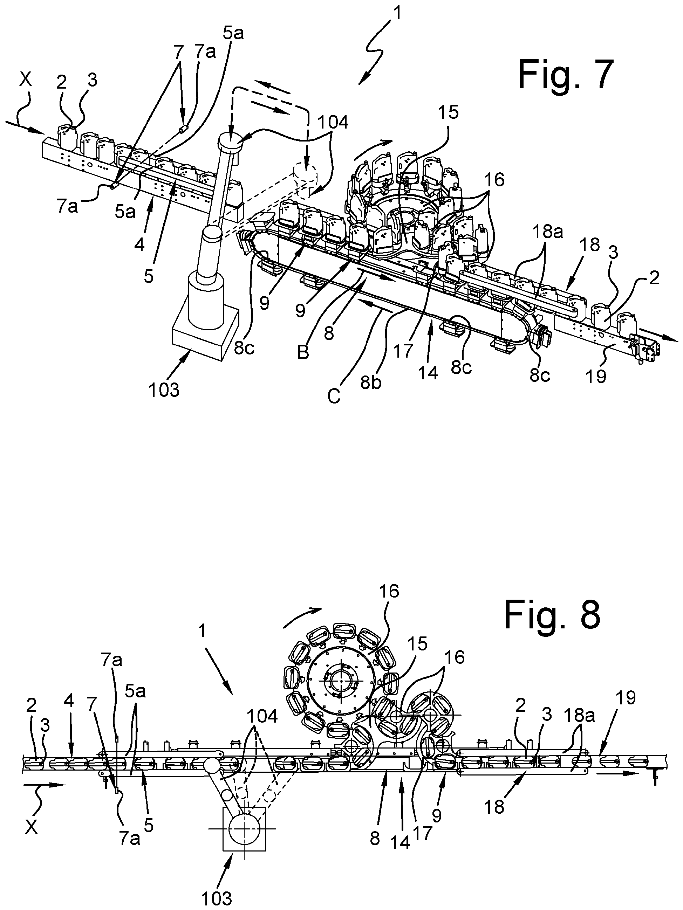

In accordance with the embodiments illustrated in figures 7 and 8, the handling system 1 can also comprise a handler 103 operatively associable to the feed conveyor 4 or to the channelling device 5 of the same to assist the synchronization between the latter and the feed elements 8c of the transportation device 8 with the respective support units 9.

The handler 103 is provided with a gripping portion 104 capable of grasping, for example by means of appropriate grippers, the mouthpiece 3 of each container 2 to be fed, so as to transfer said container 2 to the resting surface 11 of the support base 10 of a respective support unit 9 coupled to a feed element 8c of the transportation device 8, so as to ensure the alignment between the corresponding reference axis E and the respective virtual point D.

Advantageously, the handling system 1 comprises at least one control unit, preferably an electronically programmable unit, suitable for the synchronization of the advancement of the containers 2 arriving from the feed conveyor 4 and of each feed element 8c of the transportation device 8 with a respective support unit 9 to always guarantee the same positioning of the containers 2 to be fed on the advancing support units 9. In detail, the control unit is operatively connected to the feed conveyor 4 and/or to the feed elements 8c of the transportation device 8 to align the virtual reference point D identified on the support base 10 of each advancing support unit 9 on the transportation device 8 and the reference axis E of the mouthpiece 3 of the respective container 2 to be transported.

In the event that the transportation device 8 is provided with feed elements 8c which can be controlled independently, the control unit is operatively connected to each feed element 8c and/or to the transportation device 8 itself. In this way, the control unit is capable of managing the independent handling of each feed element 8c along the closed path of the transportation device 8 and the synchronization of the latter with respect to the containers 2 advancing along the channelling device 5 of the feed conveyor 4.

In the case in which the transportation device 8 is instead provided with a dragging element on which all the feed elements 8c are fixed according to a predetermined rate, the control unit is operatively connected to the dragging continuous element to control the common handling of the feed elements 8c and the synchronization of the advancement of the latter with respect to the advancement of the respective containers 2 to be fed along the channelling device 5 of the feed conveyor 4.

As an alternative or as an integration to the management of the handling of the dragging continuous element of the transportation device 8, the control unit is operatively connected to the channelling device 5 of the feed conveyor 4 to manage, through the movable side belts 6a, 6b, 6c, the advancement velocity of the containers 2 to be fed, as well as the synchronization of the advancement of the latter with respect to the advancement of the feed elements 8c of the transportation device 8 with the respective support units 9.

In detail, the control unit can be operatively connected to at least one of the advancement portions 6, preferably all of them, of the channelling device 5 of the feed conveyor 4 to manage the advancement velocity of the containers 2 along each advancement portion 6 as well as the synchronization of the advancement of the containers 2 with respect to the advancement of the feed elements 8c of the transportation device 8 with the respective support units 9.

If the auxiliary transportation device 100 is provided, the control unit is operatively connected to the feed conveyor 4 and/or to the channelling device 5 of the same, as well as to each transfer unit 101 of the auxiliary transportation device 100 to manage the advancement velocity of the containers 2 and the synchronization of the advancement of the transfer units 101 of the auxiliary transportation device 100 with respect to the advancement of the feed elements 8c of the transportation device 8 with the respective support units 9.

Should the use of the above described handler 103 is provided, the control unit is operatively connected to the feed conveyor 4 and/or to the channelling device 5 of the same, as well as to the handler 103 to manage the advancement velocity of the containers 2 and the synchronization of the handler 2 with respect to the advancement of the feed elements 8c of the transportation device 8 with the respective support units 9.

Still with reference to Figures 1 to 8, the handling system 1 provides for, at the transportation device 8, a sorting area 14 of the support units 9 with the containers 2 correctly positioned thereon.

At the sorting area 14, the handling system 1 comprises at least one diverter element 15 arranged to intercept the support units 9 transported by the feed elements 8c of the transportation device 8 to modify the advancement direction and, the path, of the support units themselves. When each feed element 8c of the transportation device 8 with the respective support unit 9 is at the diverter element 15, a suitable mechanism (not visible in the figures) intervenes on the latter to release it from the feed element 8c so as to allow to the container 2 to continue towards one or more stations of the relative machine by following directions that are different from the main advancement direction X.

In accordance with the example shown in Figures 1 to 8, the diverter element 15 is conformed in such a way as to lead each intercepted support unit 9, with the respective container 2, towards one or more star wheels or carousels 16 of the operating machine.

At the last star wheel or carousel 16 provided on the machine, a conveyor element 17 is arranged which redirects each support unit 9 provided with container 2 towards the main advancement direction X.

When each support unit 9 with the respective container 2 arrives at the main advancement direction X it is reunited with a respective feed element 8c of the transportation device 8. In this situation, corresponding mechanisms (not shown) intervene which ensure stable engagement between the support units 9 and the feed elements 8c of the transportation device 8.

At the conveyor element 17, a channelling device 18 similar to the channelling device 5 of the feed conveyor 4 is advantageously arranged.

In detail, the channelling device 18 comprises at least a pair of side belts 18a arranged to advance the containers 2 according to a predetermined and adjustable rate.

The channelling device 18 receives the containers 2 arriving from the operating machine to transport them to an outlet conveyor 19.

A device (not shown) frees the containers 2 from the clamping portions 12 of the support units 9, opening the latter.

As can be seen in Figures 1 to 8, the transportation device 8 extends between the feed conveyor 4 and the outlet conveyor 19 in such a way as to have at least an advancement section in common with the channelling device 5 of the feed conveyor 4 and with the channelling device 18 at the outlet conveyor 18.

The handling system and the method thereof allow achieving important advantages.

The system thus conceived allows the optimal synchronization between the containers to be fed and the support units that transport the containers between the feed conveyor and the star wheels or carousels of the machine.

The independent handling of each support unit along the closed path of the transportation device allows the single synchronization of each support unit with respect to the container to be transported by advancement along the main feeding direction.

Furthermore, the management of the advancement portions of the channelling device allows the optimal synchronization of the advancing containers and the handling support units.

## Claims

1. Handling system (1) of containers (2) provided with a mouthpiece (3) and a symmetry plane (Y) passing through the mouthpiece (3), the handling system (1) comprising:
at least one feed conveyor (4) suitable for advancing a plurality of containers (2) along a main feeding direction (X), the feed conveyor (4) being provided at the outlet with at least one channelling device (5);
at least one transportation device (8) operatively arranged downstream the feed conveyor (4) to advance the containers (2) arriving from the latter, the transportation device (8) comprising a plurality of feed elements (8c) that can be, each one, coupled to a respective support unit (9) provided with a clamping assembly (12) adapted to retain a respective container (2) to be advanced;
at least one control unit, preferably an electronically programmable control unit, suitable for synchronization of the advancement of the containers (2) arriving from the feed conveyor (4) and the advancement of each feed element (8c) of the transportation device (8) carrying a respective support unit (9), **characterised in that** the control unit is operatively connected to the feed conveyor (4) and/or to the feed elements (8c) of the transportation device (8) to align a virtual reference point (D) identified on each support unit (9) and a reference axis (E) of the mouthpiece (3) of the containers (2) to be transported, the virtual reference point (D) remaining unchanged with the variation of the size of the containers (2) to be fed, and **in that** each support unit (9) is adapted to be decoupled from a respective feed element (8c) to follow a path different from the path of the respective feed element (8c) itself.

2. Handling system (1) according to claim 1, wherein the channelling device (5) of the containers (2) of the feed conveyor (4) is suitable for advancing the containers (2) along the main feeding direction (X) according to an advancement velocity higher than the feeding velocity of the feed conveyor (4) whereby the feed containers (2) are spaced from each other at least during their passage from the feed conveyor (4) to the respective feed channelling device (5), the control unit being operatively connected to the channelling device (5) of the feed conveyor (4) to control the feeding velocity of the containers (2) at the feed conveyor (4) and the synchronization of the feeding of the containers (2) with respect to the advancement of the feed elements (8c) of the transportation device (8) with the respective support units (9).

3. Handling system (1) according to claim 1 or 2, wherein the channelling device (5) of the containers (2) comprises two or more advancement portions (6) each one arranged to feed the containers (2) to be fed according to different advancement velocities, higher than the feeding velocity of the feed conveyor (4), the control unit being operatively connected to at least one of the advancement portions (6) of the channelling device (5) of the feed conveyor (4) to manage the advancement velocity of the containers (2) in the latter and the synchronization of the advancement of the containers (2) with respect to the advancement of the feed elements (8c) of the transportation device (8) with the respective support units (9).

4. Handling system (1) according to any one of the preceding claims, wherein each feed element (8c) of the transportation device (8) is movable independently along a closed path which has at least one section in common with the main feed path (X) of the feed conveyor (4), preferably corresponding to at least one advancement portion of the containers (2) along the channelling device (5) of the feed conveyor (4), the control unit being operationally connected to each feed element (8c) of the transportation device (8) to independently control the handling of each feed element (8c) along the closed path and to synchronize the advancement of each feed element (8c) with respect to the corresponding container (2) advancing along the channelling device (5) of the feed conveyor (4).

5. Handling system (1) according to claim 4, wherein each feed element (8c) of the transportation device (8) is provided with an independent driven device, preferably a linear electric and/or magnetic motor.

6. Handling system (1) according to any one of claims 1 to 4, wherein each feed element (8c) of the transportation device (8) is fixed, according to a constant rate, preferably adjustable, to a dragging continuous element of the transportation device (8), optionally a chain or a conveyor belt or a belt, the control unit being operatively connected to the continuous dragging element of the transportation device (8) to control the movement of the feed elements (8c) with the respective support units (9) of the containers (2) to be fed and the synchronization of the advancement of the support units (9) with respect to the advancement of the respective containers (2) being fed along the channelling device (5) of the feed conveyor (4).

7. Handling system (1) according to any one of the preceding claims, further comprising an auxiliary transportation device (100) operatively associated to the feed conveyor (4) or to the channelling device (5) thereof to assist the synchronization between the latters and the feed elements (8c) of the transportation device (8) with the respective support units (9) of the containers (2), the auxiliary transportation device (100) being provided with a plurality of transfer units (101), preferably each one provided with a gripping portion (102) capable of grasping a respective container (2), each transfer unit (101) being movable, preferably independently from each other, along at least a portion of the main feeding direction (X), the control unit being operatively connected to the feed conveyor (4) and/or to the channelling device (5) of the same and to the transfer units (101) of the auxiliary transportation device (100) to manage the feeding velocity of the containers (2) and the synchronization of the advancement of the transfer units (101) of the auxiliary transportation device (100) with respect to the advancement of the feed elements (8c) of the transportation device (8).

8. Handling system (1) according to any one of the preceding claims, further comprising a handler (103), provided with a gripping portion (104) capable of grasping a respective container (2), operatively associated to the feed conveyor (4) or to the channelling device (5) of the same to assist the synchronization between the latter and the feed elements (8c) of the transportation device (8) with the respective support units (9) of the containers (2), the control unit being operatively connected to the feed conveyor (4) and/or to the channelling device (5) thereof and to the handler (103) to manage the feeding velocity of the containers (2) and the synchronization of the manipulator (2) with respect to the advancement of the feed elements (8c) of the transportation device (8).

9. Method for handling containers (2) provided with a mouthpiece (3) and a symmetry plane (Y) passing through the mouthpiece (3), the handling method (1) comprising:
- advancing, preferably at least by means of a feed conveyor (4), a plurality of containers (2) along a main feeding direction (X),
channelling, preferably by means of at least one channelling device (5) of the feed conveyor (4), the containers (2) to be fed and advancing such containers (2) along the main feeding direction (X);
- transporting, by at least one transportation device (8) provided with a plurality of feed elements (8c) that can be coupled to a respective support unit (9) provided with a clamping assembly (12) arranged to retain a respective container (2) to be advanced, a container (2) in channelling at least along a common portion of the main feeding direction (X);
- synchronizing, preferably by at least one optionally electronically programmable control unit, the advancement of the fed and/or channelized containers (2) and of the feed elements (8c) of the transportation device (8) with the respective support units (9), to ensure the same coupling between each fed container (2) and the respective support unit (9) carried by the respective advancement element (8c) according to a predetermined position,
**characterised in that** the phase of transporting is operated by the at least one transportation device (8) provided with the plurality of feed elements (8c) that can be decoupled from the respective support unit (9),
wherein the phase of transporting comprises the release of each support unit (9) from the feed element (8c) to follow a path different from the path of the feed element (8c) itself along the main advancement direction (X), further **characterised in that** the synchronization is carried out in such a way as to align a virtual reference point (D) identified on each support unit (9) and a reference axis (E) of the mouthpiece (3) of the containers (2) to be transported, the virtual reference point (D) remaining unchanged when the size of the containers (2) to be fed changes.

10. Handling method according to claim 9, wherein the channelling step of the containers (2) arriving from the feed conveyor (4) is carried out by advancing said containers (2) along the main feeding direction (X) according to an advancement velocity higher than the feeding velocity of the feed conveyor (4) to space each container from the others while advancing.

11. Handling method according to claim 9 or 10, wherein the channelling step of the containers (2) arriving from the feed conveyor (4) is carried out by advancing said containers (2) with different advancement velocities, said velocities being higher than the feeding velocity of the feed conveyor (4).

12. Handling method according to any one of claims 9 to 11, wherein the transportation step of the containers (2) by means of the feed elements (8c) of the transportation device (8) with the respective support units (9) is carried out by actuating the feed elements (8c) independently each other along a closed path which has at least one section in common with the main feeding path (X), preferably corresponding to at least one section of channelling feed containers (2).

13. Method according to claim 12, wherein the independent movement of each advancement element (8c) of the transportation device (8) is synchronized with the advancement of the respective container (2) to be transported in feeding and/or channelling along the main feed direction (X).

14. Method according to any one of claims 9 to 11, wherein the transportation step of the containers (2) by means of the feed elements (8c) of the transportation device (8) with the respective support units (9) is carried out by actuating in movement a dragging element of all the feed elements (8c) so that the advancement of each of them is synchronized with the advancement of the respective container (2) in feeding and/or channelling.

15. Method according to any one of claims 9 to 14, wherein the container (2) advancement step and/or the channelling step of the same is assisted by a container (2) transfer step, preferably by means of an auxiliary transportation device (100) provided with a plurality of transfer units (101), optionally provided each with a gripping portion (102) capable of grasping a respective container (2), the advancement of each container (2) during the transfer step being synchronized with the advancement of the feed elements (8c) of the transportation device (8) with the respective support units (9).

16. Method according to any one of claims 9 to 14, wherein the container (2) advancement step and/or the channelling step of the same is assisted by a container (2) handling step, preferably by means of a manipulator (103) provided with a plurality a gripping portion (104) capable of grasping a respective container (2), the advancement of each container (2) during the handling step being synchronized with the advancement of the feed elements (8c) of the transportation device (8) with the respective support units (9).

## Patentansprüche

1. Handhabungssystem (1) von Behältern (2), die mit einem Mundstück (3) und einer durch das Mundstück (3) hindurchgehenden Symmetrieebene (Y) versehen sind, wobei das Handhabungssystem (1) umfasst:
mindestens einen Vorschubförderer (4), der geeignet ist, eine Vielzahl von Behältern (2) entlang einer Hauptvorschubsrichtung (X) vorwärts zu bewegen, wobei der Vorschubförderer (4) am Ausgang mit mindestens einer Kanalisierungsvorrichtung (5) versehen ist;
mindestens eine Transportvorrichtung (8), die operativ stromabwärts des Vorschubförderers (4) angeordnet ist, um die aus letzterem ankommenden Behälter (2) vorwärts zu bewegen, wobei die Transportvorrichtung (8) eine Vielzahl von Vorschubelementen (8c) umfasst, die jeweils mit einer entsprechenden Stützeinheit (9) gekoppelt werden können, die mit einer Befestigungsanordnung (12) versehen ist, die eingerichtet ist, einen entsprechenden, vorwärts zu bewegenden Behälter (2) zu halten;
mindestens eine Steuereinheit, vorzugsweise eine elektronisch programmierbare Steuereinheit, die geeignet ist, den Vorschub der aus dem Vorschubförderer (4) ankommenden Behälter (2) und den Vorschub jedes Vorschubelements (8c) der Transportvorrichtung (8), die eine jeweilige Stützeinheit (9) trägt, zu synchronisieren **dadurch gekennzeichnet, dass** die Steuereinheit operativ mit dem Vorschubförderer (4) und/oder den Vorschubelementen (8c) der Transportvorrichtung (8) verbunden ist, um einen virtuellen Referenzpunkt (D), der auf jeder Stützeinheit (9) identifiziert ist, und eine Referenzachse (E) des Mundstücks (3) der zu transportierenden Behälter (2) auszurichten, wobei der virtuelle Referenzpunkt (D) bei der Änderung der Größe der zuzuführenden Behälter (2) unverändert bleibt, und dadurch, dass jede Stützeinheit (9) eingerichtet ist, von einem jeweiligen Vorschubelement (8c) entkoppelt zu werden, um einem Weg zu folgen, der sich von dem Weg des jeweiligen Vorschubelements (8c) selbst unterscheidet.

2. Handhabungssystem (1) nach Anspruch 1, wobei die Kanalisierungsvorrichtung (5) der Behälter (2) des Vorschubförderers (4) geeignet ist, die Behälter (2) entlang der Hauptvorschubsrichtung (X) gemäß einer Vorschubgeschwindigkeit vorwärts zu bewegen, die höher ist als die Vorschubgeschwindigkeit des Vorschubförderers (4), wodurch die Vorschubbehälter (2) zumindest während ihres Durchgangs vom Vorschubförderer (4) zur jeweiligen Vorschubkanalisierungsvorrichtung (5) voneinander beabstandet sind, wobei die Steuereinheit operativ mit der Kanalisierungsvorrichtung (5) des Vorschubförderers (4) verbunden ist, um die Vorschubgeschwindigkeit der Behälter (2) an dem Vorschubförderer (4) und die Synchronisation des Vorschubs der Behälter (2) in Bezug auf den Vorschub der Vorschubelemente (8c) der Transportvorrichtung (8) mit den jeweiligen Stützeinheiten (9) zu steuern.

3. Handhabungssystem (1) nach Anspruch 1 oder 2, wobei die Kanalisierungsvorrichtung (5) der Behälter (2) zwei oder mehr Vorschubabschnitte (6) umfasst, die jeweils so angeordnet sind, dass sie die zuzuführenden Behälter (2) gemäß unterschiedlichen Vorschubgeschwindigkeiten vorwärts bewegen, die höher als die Vorschubgeschwindigkeit des Vorschubförderers (4) ist, wobei die Steuereinheit operativ mit mindestens einem der Vorschubabschnitte (6) der Kanalisierungsvorrichtung (5) des Vorschubförderers (4) verbunden ist, um die Vorschubgeschwindigkeit der Behälter (2) in letzterem und die Synchronisation des Vorschubs der Behälter (2) in Bezug auf den Vorschub der Vorschubelemente (8c) der Transportvorrichtung (8) mit den jeweiligen Stützeinheiten (9) zu steuern.

4. Handhabungssystem (1) nach einem der vorhergehenden Ansprüche, wobei jedes Vorschubelement (8c) der Transportvorrichtung (8) entlang eines geschlossenen Weges unabhängig beweglich ist, der zumindest einen Abschnitt mit dem Hauptvorschubsweg (X) des Vorschubförderers (4) gemeinsam aufweist, der vorzugsweise zumindest einem Vorschubabschnitt der Behälter (2) entlang der Kanalisierungsvorrichtung (5) des Vorschubförderers (4) entspricht, wobei die Steuereinheit operativ mit jedem Vorschubelement (8c) der Transportvorrichtung (8) verbunden ist, um das Handhaben jedes Vorschubelements (8c) entlang des geschlossenen Weges unabhängig zu steuern und den Vorschub jedes Vorschubelements (8c) in Bezug auf den entsprechenden Behälter (2), der sich entlang der Kanalisierungsvorrichtung (5) des Vorschubförderers (4) vorwärts bewegt, zu synchronisieren.

5. Handhabungssystem (1) nach Anspruch 4, wobei jedes Vorschubelement (8c) der Transportvorrichtung (8) mit einer unabhängigen Antriebsvorrichtung, vorzugsweise einem elektrischen und/oder magnetischen Linearmotor, versehen ist.

6. Handhabungssystem (1) nach einem der Ansprüche 1 bis 4, wobei jedes Vorschubelement (8c) der Transportvorrichtung (8), gemäß einer konstanten Geschwindigkeit, vorzugsweise einstellbar, an einem schleppenden Endloselement der Transportvorrichtung (8), optional einer Kette oder einem Förderband oder einem Riemen, befestigt ist, wobei die Steuereinheit operativ mit dem schleppenden Endloselement der Transportvorrichtung (8) verbunden ist, um die Bewegung der Vorschubelemente (8c) mit den jeweiligen Stützeinheiten (9) der vorwärts zu bewegenden Behälter (2) und die Synchronisation des Vorschubs der Stützeinheiten (9) in Bezug auf den Vorschub der jeweiligen Behälter (2), die entlang der Kanalisierungsvorrichtung (5) des Vorschubförderers (4) vorwärts bewegt werden, zu steuern.

7. Handhabungssystem (I) nach einem der vorangehenden Ansprüche, ferner umfassend eine Hilfstransportvorrichtung (100), die dem Vorschubförderer (4) oder der Kanalisierungsvorrichtung (5) desselben operativ zugeordnet ist, um die Synchronisation zwischen den Letzteren und den Vorschubelementen (8c) der Transportvorrichtung(8) mit den jeweiligen Stützeinheiten (9) der Behälter (2) zu unterstützen, wobei die Hilfstransportvorrichtung (100) mit einer Vielzahl von Überführungseinheiten (101) versehen ist, die vorzugsweise jeweils mit einem Greifabschnitt (102) versehen sind, der einen jeweiligen Behälter (2) ergreifen kann, wobei jede Überführungseinheit (101), vorzugsweise unabhängig voneinander, entlang mindestens eines Abschnitts der Hauptvorschubsrichtung (X) beweglich ist, wobei die Steuereinheit mit dem Vorschubförderer (4) und/oder mit der Kanalisierungsvorrichtung (5) desselben und mit den Überführungseinheiten (101) der Hilfstransportvorrichtung (100) operativ verbunden ist, um die Vorschubsgeschwindigkeit der Behälter (2) und die Synchronisation des Vorschubs der Überführungseinheiten (101) der Hilfstransportvorrichtung (100) in Bezug auf den Vorschub der Vorschubelemente (8c) der Transportvorrichtung (8) zu steuern.

8. Handhabungssystem (1) nach einem der vorangehenden Ansprüche, ferner umfassend eine Handhabungsvorrichtung (103), die mit einem Greifabschnitt (104) versehen ist, der einen jeweiligen Behälter (2) ergreifen kann, und die dem Vorschubförderer (4) oder der Kanalisierungsvorrichtung (5) desselben operativ zugeordnet ist, um die Synchronisation zwischen dem letzteren und den Vorschubelementen (8c) der Transportvorrichtung (8) mit den jeweiligen Stützeinheiten (9) der Behälter (2) zu unterstützen, wobei die Steuereinheit mit dem Vorschubförderer (4) und/oder der Kanalisierungsvorrichtung (5) desselben und mit dem Handhabungsvorrichtung (103) operativ verbunden ist, um die Vorschubgeschwindigkeit der Behälter (2) und das Synchronisieren des Manipulators (2) in Bezug auf den Vorschub der Vorschubelemente (8c) der Transportvorrichtung (8) zu steuern.

9. Verfahren zum Handhaben von Behältern (2), die mit einem Mundstück (3) und einer durch das Mundstück (3) hindurchgehenden Symmetrieebene (Y) versehen sind, wobei das Handhabungsverfahren (1) umfasst:
- Vorwärtsbewegen eine Vielzahl von Behältern (2) entlang einer Hauptvorschubsrichtung (X) vorzugsweise zumindest mittels eines Vorschubförderers (4),
Kanalisieren, vorzugsweise mittels mindestens einer Kanalisierungsvorrichtung (5) des Vorschubförderers (4), der vorwärts zu bewegenden Behälter (2) und Vorwärtsbewegen solcher Behälter (2) entlang der Hauptvorschubsrichtung (X);
- Transportieren eines Behälters (2) durch mindestens eine Transportvorrichtung (8), die mit einer Vielzahl von Vorschubelementen (8c) versehen ist, die mit einer jeweiligen Stützeinheit gekoppelt werden können, die mit einer Befestigungsanordnung (12) versehen ist, die so eingerichtet ist, dass sie einen jeweiligen vorwärts zu bewegenden Behälter (2) beim Kanalisieren mindestens entlang eines gemeinsamen Abschnitts der Hauptvorschubsrichtung (X) hält;
- Synchronisieren, vorzugsweise durch mindestens eine optional elektronisch programmierbare Steuereinheit, des Vorschubs der vorwärtsbewegten und/oder kanalisierten Behälter (2) und der Vorschubelemente (8c) der Transportvorrichtung (8) mit den jeweiligen Stützeinheiten (9), um die gleiche Kopplung zwischen jedem vorwärtsbewegten Behälter (2) und der jeweiligen Stützeinheit (9), die von dem jeweiligen Vorschubelement (8c) getragen wird, gemäß einer vorbestimmten Position sicherzustellen,
**dadurch gekennzeichnet, dass** die Transportphase durch die mindestens eine Transportvorrichtung (8) aktiviert wird, die mit einer Vielzahl von Vorschubelementen (8c) versehen ist, die von der jeweiligen Stützeinheit (9) entkoppelt werden können, wobei die Transportphase das Lösen jeder Stützeinheit (9) von dem Vorschubelement (8c) umfasst, um einem Weg zu folgen, der sich von dem Weg des Vorschubelements (8c) selbst entlang der Hauptvorschubrichtung (X) unterscheidet,
**dadurch gekennzeichnet, dass** das Synchronisieren so durchgeführt wird, dass ein virtueller Referenzpunkt (D), der auf jeder Stützeinheit (9) identifiziert ist, und eine Referenzachse (E) des Mundstücks (3) der zu transportierenden Behälter (2) ausgerichtet werden, wobei der virtuelle Referenzpunkt (D) unverändert bleibt, wenn sich die Größe der vorwärts zu bewegenden Behälter (2) ändert.

10. Handhabungsverfahren nach Anspruch 9, wobei der Schritt des Kanalisierens der aus dem Vorschubförderer (4) ankommenden Behälter (2) durch Vorwärtsbewegen der Behälter (2) entlang der Hauptvorschubsrichtung (X) gemäß einer Vorschubsgeschwindigkeit durchgeführt wird, die höher als die Vorschubsgeschwindigkeit des Vorschubförderers (4) ist, um jeden Behälter während des Vorwärtsbewegen von den anderen zu beabstanden.

11. Handhabungsverfahren nach Anspruch 9 oder 10, wobei der Schritt des Kanalisierens der aus dem Vorschubförderer (4) ankommenden Behälter (2) durch Vorwärtsbewegen der Behälter (2) mit unterschiedlichen Vorschubgeschwindigkeiten durchgeführt wird, wobei die Geschwindigkeiten höher als die Vorschubgeschwindigkeit des Vorschubförderers (4) sind.

12. Handhabungsverfahren nach einem der Ansprüche 9 bis 11, wobei der Transportschritt der Behälter (2) mittels der Vorschubelemente (8c) der Transportvorrichtung (8) mit den jeweiligen Stützeinheiten (9) so durchgeführt wird, dass die Vorschubelemente (8c) unabhängig voneinander entlang eines geschlossenen Weges betätigt werden, der zumindest einen Abschnitt mit dem Hauptvorschubsweg (X) gemeinsam hat, der vorzugsweise zumindest einem Abschnitt der kanalisierenden Vorschubbehälter (2) entspricht.

13. Verfahren nach Anspruch 12, wobei die unabhängige Bewegung jedes Vorschubelements (8c) der Transportvorrichtung (8) mit dem Vorschub des jeweiligen zu transportierenden Behälters (2) bei dem Vorwärtsbewegen und/oder Kanalisieren entlang der Hauptvorschubsrichtung (X) synchronisiert wird.

14. Verfahren nach einem der Ansprüche 9 bis 11, wobei der Transportschritt der Behälter (2) mittels der Vorschubelemente (8c) der Transportvorrichtung (8) mit den jeweiligen Stützeinheiten (9) so durchgeführt wird, dass ein schleppendes Element aller Vorschubelemente (8c) in Bewegung gesetzt wird, so dass der Vorschub jedes von ihnen mit dem Vorschub des jeweiligen Behälters (2) bei dem Vorwärtsbewegen und/oder Kanalisieren synchronisiert wird.

15. Verfahren nach einem der Ansprüche 9 bis 14, wobei der Vorschubschritt des Behälters (2) und/oder der Kanalisierungsschritt desselben durch einen Überführungsschritt des Behälters (2) unterstützt wird, vorzugsweise mittels einer Hilfstransportvorrichtung (100), die mit einer Vielzahl von Überführungseinheiten (101) versehen ist, die optional jeweils mit einem Greifabschnitt (102) versehen sind, der einen jeweiligen Behälter (2) ergreifen kann, wobei der Vorschub jedes Behälters (2) während des Überführungsschrittes mit dem Vorschub der Vorschubelemente (8c) der Transportvorrichtung (8) mit den jeweiligen Stützeinheiten (9) synchronisiert wird.

16. Verfahren nach einem der Ansprüche 9 bis 14, wobei der Vorschubschritt des Behälters (2) und/oder der Kanalisierungsschritt desselben durch einen Handhabungsschritt des Behälters (2) unterstützt wird, vorzugsweise mittels eines Manipulators (103), der mit einer Vielzahl von Greifabschnitten (104) versehen ist, die einen jeweiligen Behälter (2) ergreifen können, wobei der Vorschub jedes Behälters (2) während des Handhabungsschritts mit dem Vorschub der Vorschubelemente (8c) der Transportvorrichtung (8) mit den jeweiligen Stützeinheiten (9) synchronisiert wird.

## Revendications

1. Système de manutention (1) de conteneurs (2) munis d'un embout (3) et d'un plan de symétrie (Y) traversant l'embout (3), le système de manutention (1) comprenant:
au moins un convoyeur d'alimentation (4) apte à faire avancer une pluralité de conteneurs (2) le long d'une direction d'alimentation principale (X), le convoyeur d'alimentation (4) étant pourvu à la sortie d'au moins un dispositif de canalisation (5);
au moins un dispositif de transport (8) fonctionnellement disposé en aval du convoyeur d'alimentation (4) pour faire avancer les conteneurs (2) arrivant de ce dernier, le dispositif de transport (8) comprenant une pluralité d'éléments d'alimentation (8c) qui peuvent être, chacun, couplés à une unité de support (9) respective pourvue d'un ensemble de serrage (12) adapté pour retenir un conteneur (2) respectif à faire avancer;
au moins une unité de commande, de préférence une unité de commande électroniquement programmable, apte à synchroniser l'avancement des conteneurs (2) arrivant du convoyeur d'alimentation (4) et l'avancement de chaque élément d'alimentation (8c) du dispositif de transport (8) portant une unité de support (9) respective, **caractérisé en ce que** l'unité de commande est reliée fonctionnellement au convoyeur d'alimentation (4) et/ou aux éléments d'alimentation (8c) du dispositif de transport (8) pour aligner un point de référence virtuel (D) identifié sur chaque unité de support (9) et un axe de référence (E) de l'embout (3) des conteneurs (2) à transporter, le point de référence virtuel (D) restant inchangé avec la variation de la taille des conteneurs (2) à alimenter, et **en ce que** chaque unité de support (9) est adaptée pour être découplée d'un élément d'alimentation (8c) respectif pour suivre un chemin différent du chemin de l'élément d'alimentation (8c) respectif lui-même.

2. Système de manutention (1) selon la revendication 1, dans lequel le dispositif de canalisation (5) des conteneurs (2) du convoyeur d'alimentation (4) est apte à faire avancer les conteneurs (2) le long de la direction d'alimentation principale (X) selon une vitesse d'avancement supérieure à la vitesse d'alimentation du convoyeur d'alimentation (4), de sorte que les conteneurs d'alimentation (2) sont espacés les uns des autres au moins pendant leur passage du convoyeur d'alimentation (4) au dispositif de canalisation d'alimentation (5) respectif, l'unité de commande est reliée fonctionnellement au dispositif de canalisation (5) du convoyeur d'alimentation (4) pour commander la vitesse d'alimentation des conteneurs (2) au niveau du convoyeur d'alimentation (4) et la synchronisation de l'alimentation des conteneurs (2) par rapport à l'avancement des éléments d'alimentation (8c) du dispositif de transport (8) avec les unités de support (9) respectives.

3. Système de manutention (1) selon la revendication 1 ou 2, dans lequel le dispositif de canalisation (5) des conteneurs (2) comprend au moins deux parties d'avancement (6) chacune disposée pour alimenter les conteneurs (2) à alimenter selon des vitesses d'avancement différentes, supérieures à la vitesse d'alimentation du convoyeur d'alimentation (4), l'unité de commande étant reliée fonctionnellement à au moins l'une des parties d'avancement (6) du dispositif de canalisation (5) du convoyeur d'alimentation (4) pour gérer la vitesse d'avancement des conteneurs (2) dans ce dernier et la synchronisation de l'avancement des conteneurs (2) par rapport à l'avancement des éléments d'alimentation (8c) du dispositif de transport (8) avec les unités de support (9) respectives.

4. Système de manutention (1) selon l'une quelconque des revendications précédentes, dans lequel chaque élément d'alimentation (8c) du dispositif de transport (8) est déplacé indépendamment le long d'un chemin fermé qui a au moins une section commune avec le chemin d'alimentation principal (X) du convoyeur d'alimentation (4), correspondant de préférence à au moins une partie d'avancement des conteneurs (2) le long du dispositif de canalisation (5) du convoyeur d'alimentation (4), l'unité de commande étant reliée fonctionnellement à chaque élément d'alimentation (8c) du dispositif de transport (8) afin de commander indépendamment la manutention de chaque élément d'alimentation (8c) le long du chemin fermé et de synchroniser l'avancement de chaque élément d'alimentation (8c) par rapport au conteneur correspondant (2) avançant le long du dispositif de canalisation (5) du convoyeur d'alimentation (4).

5. Système de manutention (1) selon la revendication 4, dans lequel chaque élément d'alimentation (8c) du dispositif de transport (8) est muni d'un dispositif à entraînement indépendant, de préférence un moteur électrique et/ou magnétique linéaire.

6. Système de manutention (1) selon l'une quelconque des revendications 1 à 4, dans lequel chaque élément d'alimentation (8c) du dispositif de transport (8) est fixé, selon un taux constant, de préférence réglable, à un élément coulissant continu du dispositif de transport (8), éventuellement une chaîne ou une bande transporteuse ou une courroie, l'unité de commande étant reliée fonctionnellement à l'élément coulissant continu du dispositif de transport (8) pour commander le mouvement des éléments d'alimentation (8c) avec les unités de support (9) respectives des conteneurs (2) à alimenter et la synchronisation de l'avancement des unités de support (9) par rapport à l'avancement des conteneurs (2) respectifs alimentés le long du dispositif de canalisation (5) du convoyeur d'alimentation (4).

7. Système de manutention (I) selon l'une quelconque des revendications précédentes, comprenant en outre un dispositif de transport auxiliaire (100) associé fonctionnellement au convoyeur d'alimentation (4) ou au dispositif de canalisation (5) de celui-ci pour aider à la synchronisation entre ces derniers et les éléments d'alimentation (8c) du dispositif de transport (8) avec les unités de support (9) respectives des conteneurs (2), le dispositif de transport auxiliaire (100) étant pourvu d'une pluralité d'unités de transfert (101), de préférence chacune pourvue d'une partie de préhension (102) capable de saisir un conteneur (2) respectif, chaque unité de transfert (101) étant mobile, de préférence indépendamment l'une de l'autre, le long d'au moins une partie de la direction principale d'alimentation (X), l'unité de commande étant reliée fonctionnellement au convoyeur d'alimentation (4) et/ou au dispositif de canalisation (5) de celui-ci et aux unités de transfert (101) du dispositif de transport auxiliaire (100) pour gérer la vitesse d'alimentation des conteneurs (2) et la synchronisation de l'avancement des unités de transfert (101) du dispositif de transport auxiliaire (100) par rapport à l'avancement des éléments d'alimentation (8c) du dispositif de transport (8).

8. Système de manutention (I) selon l'une quelconque des revendications précédentes, comprenant en outre un manipulateur (103), muni d'une partie de préhension (104) capable de saisir un conteneur (2) respectif, associé fonctionnellement au convoyeur d'alimentation (4) ou au dispositif de canalisation (5) de ce dernier pour aider à la synchronisation entre ce dernier et les éléments d'alimentation (8c) du dispositif de transport (8) avec les unités de support (9) respectives des conteneurs (2), l'unité de commande étant reliée fonctionnellement au convoyeur d'alimentation (4) et/ou à son dispositif de canalisation (5) et au manipulateur (103) pour gérer la vitesse d'alimentation des conteneurs (2) et la synchronisation du manipulateur (2) par rapport à l'avancement des éléments d'alimentation (8c) du dispositif de transport (8).

9. Procédé de manutention de conteneurs (2) munis d'un embout (3) et d'un plan de symétrie (Y) traversant l'embout (3), le procédé de manutention (1) consistant à:
- faire avancer, de préférence au moins au moyen d'un convoyeur d'alimentation (4), une pluralité de conteneurs (2) le long d'une direction d'alimentation principale (X), canaliser, de préférence au moyen d'au moins un dispositif de canalisation (5) du convoyeur d'alimentation (4), les conteneurs (2) à alimenter et faire avancer ces conteneurs (2) le long de la direction d'alimentation principale (X);
- transporter par au moins un dispositif de transport (8) muni d'une pluralité d'éléments d'alimentation (8c) pouvant être couplés à une unité de support respective munie d'un ensemble de serrage (12) conçu pour retenir un conteneur (2) respectif à faire avancer, un conteneur (2) dans la canalisation au moins le long d'une partie commune de la direction d'alimentation principale (X);
- synchroniser, de préférence par au moins une unité de commande éventuellement programmable électroniquement, l'avancement des conteneurs (2) alimentés et/ou canalisés et des éléments d'alimentation (8c) du dispositif de transport (8) avec les unités de support (9) respectives, pour assurer le même couplage entre chaque conteneur alimenté (2) et l'unité de support (9) respective portée par l'élément d'avancement (8c) respectif en fonction d'une position prédéterminée,
**caractérisé en ce que** la phase de transport est assurée par au moins un dispositif de transport (8) muni de plusieurs éléments d'alimentation (8c) qui peuvent être découplés de l'unité de support (9) respective,
dans lequel la phase de transport comprend la libération de chaque unité de support (9) de l'élément d'alimentation (8c) pour qu'elle suive un chemin différent de celui de l'élément d'alimentation (8c) lui-même le long de la direction d'avancement principale (X),
**caractérisé en outre en ce que** la synchronisation est effectuée de manière à aligner un point de référence virtuel (D) identifié sur chaque unité de support (9) et un axe de référence (E) de l'embout (3) des conteneurs (2) à transporter, le point de référence virtuel (D) restant inchangé lorsque la taille des conteneurs (2) à alimenter change.

10. Procédé de manutention selon la revendication 9, dans lequel l'étape de canalisation des conteneurs (2) arrivant du convoyeur d'alimentation (4) est réalisée en faisant avancer lesdits conteneurs (2) le long de la direction principale d'alimentation (X) selon une vitesse d'avancement supérieure à la vitesse d'alimentation du convoyeur d'alimentation (4) afin d'espacer chaque conteneur des autres lors de l'avancement.

11. Procédé de manutention selon la revendication 9 ou 10, dans lequel l'étape de canalisation des conteneurs (2) arrivant du convoyeur d'alimentation (4) est réalisée en faisant avancer lesdits conteneurs (2) avec différentes vitesses d'avancement, ces vitesses étant supérieures à la vitesse d'alimentation du convoyeur d'alimentation (4).

12. Procédé de manutention selon l'une quelconque des revendications 9 à 11, dans lequel l'étape de transport des conteneurs (2) au moyen des éléments d'alimentation (8c) du dispositif de transport (8) avec les unités de support (9) respectives est effectuée en actionnant les éléments d'alimentation (8c) indépendamment les uns des autres le long d'un chemin fermé qui a au moins une section en commun avec le chemin d'alimentation principal (X), correspondant de préférence à au moins une section de canalisation des conteneurs d'alimentation (2).

13. Procédé selon la revendication 12, dans lequel le mouvement indépendant de chaque élément d'avancement (8c) du dispositif de transport (8) est synchronisé avec l'avancement du conteneur (2) respectif à transporter dans l'alimentation et/ou la canalisation le long de la direction principale d'alimentation (X).

14. Procédé selon l'une quelconque des revendications 9 à 11, dans lequel l'étape de transport des conteneurs (2) au moyen des éléments d'alimentation (8c) du dispositif de transport (8) avec les unités de support (9) respectives est réalisée en actionnant en mouvement un élément coulissant de tous les éléments d'alimentation (8c) de sorte que l'avancement de chacun d'entre eux soit synchronisé avec l'avancement du conteneur (2) respectif dans l'alimentation et/ou la canalisation.

15. Procédé selon l'une quelconque des revendications 9 à 14, dans lequel l'étape d'avancement du conteneur (2) et/ou l'étape de canalisation de celui-ci est assistée par une étape de transfert du conteneur (2), de préférence au moyen d'un dispositif de transport auxiliaire (100) pourvu d'une pluralité d'unités de transfert (101), éventuellement pourvues chacune d'une partie de préhension (102) capable de saisir un conteneur (2) respectif, l'avancement de chaque conteneur (2) au cours de l'étape de transfert étant synchronisé avec l'avancement des éléments d'alimentation (8c) du dispositif de transport (8) avec les unités de support (9) respectives.

16. Procédé selon l'une quelconque des revendications 9 à 14, dans lequel l'étape d'avancement du conteneur (2) et/ou l'étape de canalisation de celui-ci est assistée par une étape de manutention du conteneur (2), de préférence au moyen d'un manipulateur (103) muni d'une pluralité de parties de préhension (104) capables de saisir un conteneur (2) respectif, l'avancement de chaque conteneur (2) au cours de l'étape de manutention étant synchronisé avec l'avancement des éléments d'alimentation (8c) du dispositif de transport (8) avec les unités de support (9) respectives.
